# EUROPÄISCHE PATENTSCHRIFT

(11) **EP 0 881 882 B1**
(45) Veröffentlichungstag und Bekanntmachung des Hinweises auf die Patenterteilung: **04.10.2001**
(21) Anmeldenummer: 96939081.4
(22) Anmeldetag: 18.11.1996
(51) Int. Cl.: A01N 55/00

(54) **VERFAHREN ZUR BEKÄMPFUNG VON SCHÄDLINGEN DURCH ANWENDUNG CYCLISCHER POLYSILOXANE**
METHOD FOR CONTROLLING PESTS USING CYCLIC POLYSILOXANES
PROCEDE DE LUTTE CONTRE LES ORGANISMES NUISIBLES UTILISANT DES POLYSILOXANES CYCLIQUES

(30) Priorität: 30.11.1995 DE 19544669
(43) Veröffentlichungstag der Anmeldung: 09.12.1998
(73) Patentinhaber: BAYER AG, 51368 Leverkusen (DE)
(72) Erfinder: KALBE, Jochen, D-42799 Leichlingen (DE); TURBERG, Andreas, D-40699 Erkrath (DE); LONDERSHAUSEN, Michael, D-40699 Erkrath (DE); MENCKE, Norbert, D-51381 Leverkusen (DE); POSPISCHIL, Reiner, D-50129 Bergheim (DE); SONNECK, Rainer, D-51375 Leverkusen (DE)
(86) Internationale Anmeldenummer: EP9605059
(87) Internationale Veröffentlichungsnummer: WO9719596

(56) Entgegenhaltungen:
- EP-A- 0 191 543
- US-A- 4 654 328
- JOURNAL OF ECONOMIC ENTOMOLOGY, Bd. 62, Nr. 4, 1969, Seiten 919-925, XP002027748 CHESTER M. HIMEL: "The optimum size for insecticide spray droplets"

## Beschreibung

Die vorliegende Erfindung betrifft ein Verfahren zur Bekämpfung von Schädlingen auf Basis sofort wirkender, rückstandsfreien und ohne anhaltende Wirkung einzusetzender Schädlingsbekämpfungsmittel auf der Basis von cyclischen Polysiloxanen.

Es war bekannt, dass cyclische Polysiloxane mit 4 und 5 Siloxaneinheiten insektizid wirksam sind. Es war auch bekannt, dass man mit Polysiloxanen Insekten durch Besprühen abtöten kann (US-P 4 654 328).

Die praktische Anwendung zeigt jedoch, dass bei der Anwendung Probleme auftreten. Cyclische Polysiloxane mit 4 Siloxaneinheiten kristallisieren bei Temperaturen unter ca. 18°C aus und lassen sich dann nicht mehr einwandfrei versprühen. Beim Besprühen von Insekten mit cyclischen Polysiloxanen aus Aerosolsprays, die eine mittlere Tröpfchengröße von 50 µ erzeugen, ergibt keine zufriedenstellende Wirkung.

Gegenstand der Erfindung sind daher folgende Verfahren:
1. Verfahren zur Bekämpfung von Insekten und Akarien durch Anwendung eines sofort wirkenden insektiziden und akariziden Mittels, das rückstandsfrei, ohne anhaltende Wirkung anzuwenden ist, dadurch gekennzeichnet, dass cyclische Polysiloxane der Formel (I) 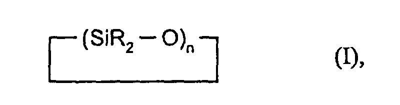 in welcher
   - R: für gleiche oder verschiedene Reste der Gruppe Methyl, Ethyl, Propyl steht,
   - n: für ganze Zahlen von 3 bis 6 steht,
   mit einer mittleren Tröpfchengröße im Sprühnebel von 130 bis 500 µ (Durchmesser) in üblicher Weise auf die Schädlinge versprüht werden.
2. Verfahren zur Bekämpfung von Insekten und Akarien gemäß Anspruch 1, dadurch gekennzeichnet, dass überwiegend als Bestandteil der Formel (I) Verbindungen angewendet werden, in denen der Index n = 5 ist.
3. Verfahren zur zur Bekämpfung von Insekten und Akarien gemäß Anspruch 1, dadurch gekennzeichnet, dass die Bestandteile der Formel (I) mit den Indices 4 und 5 in den Anteilen
   n = 4 < 85 % (Gewicht)
   n = 5 > 15 % (Gewicht)
   angewendet werden.
4. Verfahren zur Bekämpfung von Insekten und Akarien gemäß Anspruch 1, dadurch gekennzeichnet, dass die Bestandteile der Formel (I) mit den Indices 4 und 5 in den Anteilen
   n = 4 85 bis 50 Gew.-%
   n = 5 15 bis 50 Gew.-%
   angewendet werden.
5. Verfahren zur Bekämpfung von Insekten und Akarien gemäß Anspruch 1, dadurch gekennzeichnet, dass die Bestandteile der Formel (I) mit den Indices 4 und 5 in den Anteilen
   n = 4 80 bis 60 Gew.-%
   n = 5 20 bis 40 Gew.-%
   angewendet werden.
6. Verfahren zur Bekämpfung von Insekten und Akarien gemäß Anspruch 1, dadurch gekennzeichnet, dass die Bestandteile der Formel (I) mit den Indices 4 und 5 in den Anteilen
   n = 4 75 Gew.-%
   n = 5 25 Gew.-%
   angewendet werden.

Die erfindungsgemäßen Verfahren haben erhebliche Vorteile für die Praxis. Die Wirkung auf Schädlinge ist sofort einsetzend, d.h. der Verbraucher sieht den Erfolg der Bekämpfungsmaßnahme direkt. Der Wirkstoff wirkt ausschließlich in direktem Kontakt mit dem Schädling, eine vorbeugende Behandlung (Residualwirkung) ist nicht möglich. Das Verfahren wird nur bei akutem Befall und nur direkt auf die zu bekämpfenden Schädlinge eingesetzt. D.h. es werden keine vorbeugenden und überflüssigen Wirkstoffmengen in die Umgebung ausgebracht.

Durch die gezielte Anwendung können Nützlinge geschont werden. Der Wirkstoff ist für Pflanzen, Säugetiere und Menschen untoxisch.

Der Wirkstoff verdampft rasch von getroffenen Oberflächen (Pflanzen, Möbel, Wände, Fensterscheiben) ohne Rückstände zu hinterlassen.

Der Wirkstoff wird innerhalb kurzer Zeit bei Lichteinwirkung abiotisch abgebaut.

Die erfindungsgemäßen Mittel eignen sich zur Bekämpfung von tierischen Schädlingen, vorzugsweise Arthropoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp..

Die erfindungsgemäß eingesetzten Mittel eignen sich bei günstiger Warmblütertoxizität zur Bekämpfung von tierischen Schädlingen wie Arthropoden, vorzugsweise Insekten, Spinnentieren, die in der Tierhaltung und Tierzucht bei Nutz-, Zucht-, Zoo-, Labor-, Versuchs- und Hobbytieren vorkommen. Sie sind dabei gegen alle oder einzelne Entwicklungsstadien der Schädlinge sowie gegen resistente und normal sensible Arten der Schädlinge wirksam.

Zu den Schädlingen gehören:
Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bobiola spp.;
aus der Ordnung der Diptera z.B. Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cardylobia spp., Cochiomyia spp., Chrysomyia spp., Sarcophaga spp., Wohlfartia spp., Gaserophilus spp., Oesteromyia spp., Oedemagena sp., Hypoderma spp., Oestrus spp., Rhinoestrus spp., Melophagus spp., Hippobosca spp.
Aus der Ordnung der Siphonaptera z.B. Ctenocephalides spp., Echidnophaga spp., Ceratophyllus spp.
Aus der Ordnung der Metastigmata z.B. Hyalomma spp., Rhipicephalus spp., Boophilus spp., Ambyomma spp., Haemophysalis spp., Dermacentor spp., Ixodes spp., Argas spp., Ornithodorus spp., Otobius spp.;
aus der Ordnung der Mesastigmata z.B. Dermanyssus spp., Ornithonyssus spp., Pneumonyssus spp.
Aus der Ordnung der Prostigmata z.B. Cheyletiella spp., Psorergates spp., Myobia spp., Demdex spp., Neotrombicula spp.;

Zu den Haus- und Nutztieren gehören Säugetiere wie z.B. Rinder, Schafe, Ziegen, Pferde, Schweine, Hunde, Katzen, Kamele, Wasserbüffel, Esel, Kaninchen, Damwild, Rentiere, Pelztiere wie z.B. Nerze, Chinchilla, Waschbär, Vögel wie z.B. Hühner, Puten, Fasanen, Gänse, Enten.

Zu Labor- und Versuchstieren gehören z.B. Mäuse, Ratten, Meerschweinchen, Goldhamster, Hunde und Katzen.

Zu den Hobbytieren gehören z.B. Hunde und Katzen.

Die erfindungsgemäß eingesetzten Mittel lassen sich besonders bevorzugt in geschlossenen Räumen wie Wohnungen, Hallen o.ä. einsetzen. Sie eignen sich besonders zur Bekämpfung tierischer Schädlinge und Lästlinge, die im Haushalt vorkommen.

Dazu seien besonders genannt Fliegen, Mücken, Wespen, Ameisen, Schaben, Silberfischchen.

Die cyclischen Polysiloxane sind durch Formel (I) allgemein definiert.

Besonders bevorzugt sind Verbindungen der Formel (I), in welcher R für Methyl steht und n für 4 und 5 steht.

Besonders genannt seien die cyclischen Polysiloxane Octamethylcyclotetrasiloxan und Decamethylcyclopentasiloxan sowie ihre Mischungen miteinander und mit cyclischen Polysiloxanen, die durch das Herstellverfahren in ihnen enthalten sind.

Wie bereits erwähnt, werden die erfindungsgemäßen Mittel direkt auf die zu bekämpfenden Schädlinge oder Lästlinge aufgesprüht. Dies geschieht in üblicher Weise mit Pumpsprays, Aerosolsprays, Spritz- und Sprühgeräten.

Voraussetzung für einen erfolgreichen Einsatz des Verfahrens ist eine mittlere Tröpfchengröße des Wirkstoffnebels von 130 bis 500 µ (Durchmesser). Die Verteilung der Tropfengröße liegt zwischen 100 und 700 µ, dabei sind 90 % aller Tropfen kleiner als 600 µ. Die Spritz- und Sprühgeräte müssen so konstruiert sein, dass sie diese Tröpfchengröße gewährleisten.

Nur diese Tröpfchengröße stellt sicher, dass bei normaler Handhabung (Besprühen aus ca. 20 bis 100 cm Abstand) die Schädlinge von einer ausreichenden Wirkstoffmenge getroffen werden. Z.B. wurde gefunden, dass Versprühen der Wirkstoffe mit mittlerer Tröpfchengröße < 80 µ in 60 cm Abstand keinerlei Wirkung auf Fliegen hatte.

Bevorzugt ist eine Verteilung der Tröpfchengrößen von 150 bis 500 µ, dabei sind 90 % aller Tropfen <420 µ. Dies entspricht einem Mittelwert der Tröpfchengröße von 160 bis 300 µ.

Besonders geeignet als Wirkstoff und Mittel ist Decamethylcyclopentasiloxan. Dieser Wirkstoff ist kältestabil ohne auszukristallisieren und damit gut lagerfähig und gebrauchsfähig.

Er wird besonders dann eingesetzt, wenn es auf Kältestabilität ankommt und das rasche rückstandsfreie Verdampfen des Wirkstoffs eine untergeordnete Rolle spielt.

Mischungen von Octamethylcyclotetrasiloxan und Decamethylcyclopentasiloxan sind besonders bevorzugt wenn der Gehalt des Pentasiloxan >15 % (Gewicht) ist. Solche Mischungen haben den Vorteil guter Stabilität gegen Auskristallisieren bei Kälte verbunden mit rascher rückstandsfreier Verdampfung der Mischung von getroffenen Oberflächen. Dies macht solche Mischungen besonders geeignet zur Anwendung im Haushalt.

Bevorzugt werden in den erfindungsgemäß einzusetzenden Mitteln die cyclischen Polysiloxane als solche ohne weitere Zusätze wie Lösungsmittel angewendet.

Es ist aber ohne weiteres möglich, den Mitteln übliche Zusätze wie Lösungsmittel, Tenside, Parfümöle, zuzusetzen.

### Beispiel A

### Test mit Fliegen (Musca domestica) - Sprühverfahren

- Testtiere:: adulte Musca domestica, Stamm Reichswald (multiresistent)
- Lösungsmittel:: entfällt

Zwecks Herstellung einer geeigneten Formulierung vermischt man 25 Teile Decamethylcyclopentasiloxan mit 75 Teilen Octamethylcyclotetrasiloxan.

100 ml dieser Wirkstoffzubereitung werden in Sprühflaschen mit Düsendurchmesser überführt. Drahtgazescheiben von 10,8 cm Durchmesser werden in PP-Dosen (Ø 9,7 cm, H 8 cm) gebracht (halbkugelförmig zum Boden hin gewölbt). 20 Fliegen werden mit CO₂ betäubt und auf die Gaze überführt. Die Dose wird mit einer zweiten, jetzt nach oben gewölbten Drahtgazescheibe verschlossen und 30 min bei Raumtemperatur gehalten, bis alle Fliegen wieder normale Aktivität zeigen. Die Dose wird waagerecht in 15 cm Abstand vor dem Sprühkopf der Sprühflasche gehalten. Durch dreimaliges Betätigen des Sprühhebels werden insgesamt 3 ml Wirkstoffzubereitung auf den Fliegen versprüht. Anschließend wird das Gefäß wieder mit der Öffnung nach oben gestellt.

Nach 1 Minute waren 100 % der Fliegen abgetötet.

### Beispiel B

### Musca domestica/Stomoxys calcitrans

### (Versuchsbehandlung unter Praxisbedingungen in einem Schweinestall)

Der Versuch wurde in einem Schweinestall durchgeführt. In dem Stall waren 3 Buchten belegt, in denen sich insgesamt 6 Tiere befanden. Der Fliegenbefall lag bei 50 - 100 Fliegen pro Tier.

### Methode:

Die in Beispiel A beschriebene Formulierung wurde unverdünnt mit einem Druck von 4,5 mbar ausgebracht. (Düse: Holder-Seriendüse "Merkur" aus Messing mit Drallkörper, Düsenbohrung 1,5 mm: Spritzwinkel ca. 65°). Der Spritzdruck wurde über eine Atemluftflasche reguliert.

Es wurden nur die Bereiche des Stalles besprüht, auf denen sich größere Fliegenansammlungen befanden (M. domestica und S. calcitrans). Die Aufwandmenge betrug 30 bis 50 g Formulierung pro m².

Fliegen, die von dem Spritznebel getroffen und benetzt wurden, fielen direkt nach der Behandlung zu Boden oder blieben an der Wand bzw. den Tieren hängen. Eine Wiedererholung wurde nicht beobachtet. M. domestica und S. calcitrans wurden in gleicher Weise von dem Spritzmittel erfaßt.

### Beispiel C

Die in Beispiel A beschriebene Formulierung wurde in 2 Stallungen, in denen zuvor Fliegen (M. domestica) freigelassen wurden (5 000 bis 10 000 pro Raum), unverdünnt mit verschiedenen Spritz- und Vernebelungsgeräten ausgebracht (s. Tabelle 1).

**Tabelle 1**

| **Applikation** | **Musca domestica** |
|---|---|
| Spritzgerät gemäß Beispiel B 4-5 bar, feine Düse | ++ |
| ULV (ROFA) | - |
| Kaltnebel (Microjet) | - |
| ++ = gute Wirkung - = keine Wirkung | |

Das Rofa Gerät wird zur ULV-Applikation verwendet und zeichnet sich durch eine Verteilung der jeweiligen Formulierung in sehr feinen Tröpfchen aus (5 bis 30 µ). Die feinen Tröpfchen reichen nicht aus, um eine ausreichende Wirkung zu erzielen, auch wenn die Tiere über einen längeren Zeitraum angesprüht werden.

Gleiches gilt für das Kaltnebelgerät 'Mikrojet', das die Substanz mit einer mittleren Tröpfchengröße von <80 µ verteilt.

Prüfungen mit dem in Beispiel B beschriebenen Gerät führten wieder zu dem beschriebenen Ergebnis. Fliegen, die direkt von den Tröpfchen getroffen wurden, starben innerhalb 15 Minuten ab.

Der Spritzbelag war nach ca. 15 Minuten auf den Wänden (Kalksandstein) nicht mehr feststellbar.

### Beispiel D

Eine stark mit Blattläusen befallene Pflanze wurde mit dem Drucksprühgerät eingesprüht. Die vom Spritznebel getroffenen Blattläuse ließen sich innerhalb von 5 Minuten nach der Behandlung von der Pflanze abschütteln und erholten sich nicht wieder.

## Patentansprüche

1. Verfahren zur Bekämpfung von Insekten und Akarien durch Anwendung eines sofort wirkenden insektiziden und akariziden Mittels, das rückstandsfrei, ohne anhaltende Wirkung anzuwenden ist, **dadurch gekennzeichnet, dass** cyclische Polysiloxane der Formel (I) 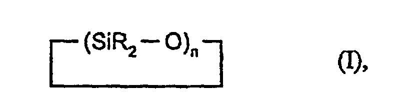 in welcher
R für gleiche oder verschiedene Reste der Gruppe Methyl, Ethyl, Propyl steht,
n für ganze Zahlen von 3 bis 6 steht,
mit einer mittleren Tröpfchengröße im Sprühnebel von 130 bis 500 µ (Durchmesser) in üblicher Weise auf die Schädlinge versprüht werden.

2. Verfahren zur Bekämpfung von Insekten und Akarien gemäß Anspruch 1, **dadurch gekennzeichnet, dass** überwiegend als Bestandteil der Formel (I) Verbindungen angewendet werden in denen der Index n = 5 ist.

3. Verfahren zur zur Bekämpfung von Insekten und Akarien gemäß Anspruch 1, **dadurch gekennzeichnet, dass** die Bestandteile der Formel (I) mit den Indices 4 und 5 in den Anteilen
n = 4 < 85 % (Gewicht)
n = 5 > 15 % (Gewicht)
angewendet werden.

4. Verfahren zur Bekämpfung von Insekten und Akarien gemäß Anspruch 1, **dadurch gekennzeichnet, dass** die Bestandteile der Formel (I) mit den Indices 4 und 5 in den Anteilen
n = 4 85 bis 50 Gew.-%
n = 5 15 bis 50 Gew.-%
angewendet werden.

5. Verfahren zur Bekämpfung von Insekten und Akarien gemäß Anspruch 1, **dadurch gekennzeichnet, dass** die Bestandteile der Formel (I) mit den Indices 4 und 5 in den Anteilen
n = 4 80 bis 60 Gew.-%
n = 5 20 bis 40 Gew.-%
angewendet werden.

6. Verfahren zur Bekämpfung von Insekten und Akarien gemäß Anspruch 1, **dadurch gekennzeichnet, dass** die Bestandteile der Formel (I) mit den Indices 4 und 5 in den Anteilen
n = 4 75 Gew.-%
n = 5 25 Gew.-%
angewendet werden.

## Claims

1. Method for controlling insects and acari by using an immediately acting insecticidal and acaricidal composition which can be used without a residue and without a lasting action, **characterized in that** cyclic polysiloxanes of the formula (I) 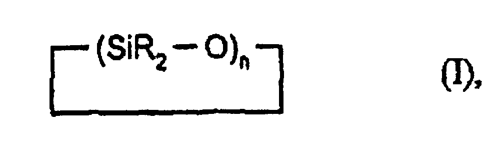 in which
R represents identical or different radicals from the group consisting of methyl, ethyl and propyl,
n represents integers from 3 to 6,
are sprayed onto the pests in the customary manner with an average droplet size in the spray mist of 130 to 500 *µ* (diameter).

2. Method for controlling insects and acari according to Claim 1, **characterized in that** compounds in which the index n is 5 are predominantly used as the constituent of the formula (I).

3. Method for controlling insects and acari according to claim 1, **characterized in that** the constituents of the formula (I) with the indices 4 and 5 are used in the proportions of
n = 4 < 85% (weight)
n = 5 > 15% (weight).

4. Method for controlling insects and acari according to claim 1, **characterized in that** the constituents of the formula (I) with the indices 4 and 5 are used in the proportions of
n = 4 85 to 50% by weight
n = 5 15 to 50% by weight.

5. Method for controlling insects and acari according to claim 1, **characterized in that** the constituents of the formula (I) with the indices 4 and 5 are used in the proportions of
n = 4 80 to 60% by weight
n = 5 20 to 40% by weight.

6. Method for controlling insects and acari according to claim 1, **characterized in that** the constituents of the formula (I) with the indices 4 and 5 are used in the proportions of
n = 4 75% by weight
n = 5 25% by weight.

## Revendications

1. Procédé de lutte contre les insectes et acariens par utilisation d'un agent insecticide et acaricide agissant immédiatement, qui est exempt de résidu et sans activité persistante, **caractérisé en ce que** les polysiloxanes cycliques de formule (I) : 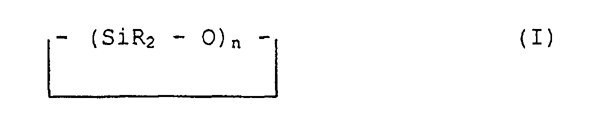 dans laquelle:
R représente des restes identiques ou différents, choisis parmi le groupe des méthyle, éthyle, propyle ;
n représente un nombre entier allant de 3 à 6,
sont pulvérisés avec une taille moyenne des gouttelettes dans le brouillard de pulvérisation allant de 130 à 500 µm (diamètre), de manière usuelle sur les parasites.

2. Procédé de lutte contre les insectes et acariens suivant la revendication 1, **caractérisé en ce que** l'on utilise essentiellement comme constituant de formule (I), les composés dans lesquels l'indice n est égal à 5.

3. Procédé de lutte contre les insectes et acariens suivant la revendication 1, **caractérisé en ce que** l'on utilise des constituants de formule (I) avec les indices 4 et 5 en les proportions :
n = 4 < 85% (en poids)
n = 5 > 15% (en poids).

4. Procédé de lutte contre les insectes et acariens suivant la revendication 1, **caractérisé en ce que** l'on utilise des constituants de formule (I) avec les indices 4 et 5 en les proportions :
n = 4 85 à 50% en poids
n = 5 15 à 50% en poids.

5. Procédé de lutte contre les insectes et acariens suivant la revendication 1, **caractérisé en ce que** l'on utilise des constituants de formule (I) avec les indices 4 et 5 en les proportions :
n = 4 80 à 60% en poids
n = 5 20 à 40% en poids.

6. Procédé de lutte contre les insectes et acariens suivant la revendication 1, **caractérisé en ce que** l'on utilise des constituants de formule (I) avec les indices 4 et 5 en les proportions :
n = 4 75% en poids
n = 5 25% en poids.
